(19) Europäisches Patentamt
European Patent Office
Office européen des brevets

(11) **EP 2 479 561 A1**

(12) **EUROPEAN PATENT APPLICATION**
published in accordance with Art. 153(4) EPC

(43) Date of publication:
**25.07.2012 Bulletin 2012/30**

(51) Int Cl.:
*G01N 27/26* (2006.01)    *G01N 27/416* (2006.01)

(21) Application number: **10817283.4**

(22) Date of filing: **17.09.2010**

(86) International application number:
**PCT/JP2010/066199**

(87) International publication number:
**WO 2011/034170 (24.03.2011 Gazette 2011/12)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **18.09.2009 JP 2009217464**

(71) Applicant: **Hitachi Chemical Company, Ltd.
Tokyo 163-0449 (JP)**

(72) Inventors:
• **KOBAYASHI Teruyuki
Hitachi-shi
Ibaraki 317-8555 (JP)**
• **UCHIDA Tsuyoshi
Tokyo 163-0449 (JP)**

(74) Representative: **HOFFMANN EITLE
Patent- und Rechtsanwälte
Arabellastraße 4
81925 München (DE)**

(54) **ION SELECTIVE ELECTRODE CARTRIDGE**

(57)    Ion concentration measurement requires a calibration before the start of the measurement, and thus the start of the measurement is delayed for the calibration period. Hence, an ion selective electrode cartridge including an ion selective electrode for measuring the concentration of particular ions dissolved in a test solution is provided with a storage means storing therein an electrode slope value specific to the ion selective electrode.

FIG. 1

**Description**

TECHNICAL FIELD

The present invention relates to an ion selective electrode cartridge including an ion selective electrode for measuring a concentration of particular ions in a test solution.

BACKGROUND ART

Conventionally, ion selective electrodes have been used for measuring concentrations (or activities) of particular ions in a test solution.

The types of the ion selective electrodes are mainly categorized into a solid film type, a glass film type, and a neutral carrier type. Among these, the neutral carrier type electrode is also called a liquid film type electrode. This ion selection electrode generates an electromotive force in accordance with the Nernst equation shown below.

$$E = Eo + (RT/nF)\log Cx \quad \dots \text{(Formula 1)}$$

Herein, Eo is a standard electrode potential, R is the Avogadro constant, T is an absolute temperature, n is (the number of) charges of ions to be measured, F is the Faraday constant, and Cx is a concentration of the ions to be measured.

A term (RT/nF) in the Eernst equation indicates a sensitivity of each electrode and is generally referred to as an electrode slope. Theoretically, the electrode slope is calculated to be 59 mv/dec at an absolute temperature of 300 degrees C (a measurement temperature of 27 degrees C). If an electrode film does not have a failure, the electrode slope is almost constant in a certain time period. However, to be precisely, values of the electrode slope are specific to respective electrodes. The electrode slope becomes considerably lower than its theoretical value in some cases, and thus is generally used for determining a working life of an electrode. For this reason, in order to avoid an influence of the electrode working life to measure ion concentration accurately, a conventional automatic ion concentration measurement device performs a step of checking an electrode slope, that is, a step generally referred to as a calibration before the start of measurement of a test solution. The calibration uses two types of calibration solutions having known concentrations which are a high concentration and a low concentration and measures an electromotive force (a potential difference generated between an electrode and a reference electrode in the measurement device) in each concentration. By using a value of each measurement, the electrode slope is determined from the Nernst equation. Generally, at least once a day before the start of the test solution measurement, an automatic ion concentration analyzer performs so-called a 2-point calibration by using the two types of calibration solutions having known concentrations, that is, the high-concentration solution and the low-concentration solution.

When supply of the calibration solutions is insufficient or when removal of the calibration solutions or cleaning after execution of the calibration is insufficient, subsequently performed measurement might be influenced. In this case, a resultant measurement anomaly prevents the calibration from being performed properly or results in an erroneous measurement. Thus, various methods for detecting an anomaly value have been proposed (see Patent Document 1 or Patent Document 2, for example). In addition, methods for preventing occurrence of an anomaly have also been proposed (see Patent Document 3 or Patent Document 4, for example).

PRIOR ART DOCUMENTS

PATENT DOCUMENTS

PATENT DOCUMENT 1: Japanese Patent Application Publication No. Hei 2-159548
PATENT DOCUMENT 2: Japanese Patent Application Publication No. 2004-251799
PATENT DOCUMENT 3: Japanese Patent Application Publication No. 2001-264283
PATENT DOCUMENT 4: Japanese Patent Application Publication No. 2008-051620

SUMMARY OF THE INVENTION

PROBLEMS TO BE SOLVED BY THE INVENTION

In each of the above cases, however, a device which requires the calibration every day requires a certain time to execute the calibration, and thus the start of ion concentration measurement is delayed for the certain time. Further, the calibration requires reagents (such as a calibration solution) dedicated for the calibration, and thus cost increase due to the reagents largely burdens those in charge of inspection. In addition, maintenance and replacement work for consumable parts such as a reagent supply pump require labor and costs. Thus, reduction of calibration execution times is demanded.

Hence, an object of the present invention is to provide an ion selective electrode cassette cartridge in which a calibration such as a 2-point calibration in an automatic ion concentration analyzer does not have to be executed within an expected usable period or times (a working life period of an electrode).

MEANS FOR SOLVING THE PROBLEMS

As the result of earnest studies, the inventors of the present invention have found that the above problems can be solved by storing electrode slope values specific to respective electrodes in an ion selective electrode cartridge, and thus have come to make the present invention.

In sum, the present invention provides an ion selective electrode cartridge which is provided with ion selective electrodes for measuring a concentration of particular ions dissolving in a test solution and which includes a storage means for storing electrode slope values specific to the ion selective electrodes.

EFFECT OF THE INVENTION

According to the present invention, an ion concentration analysis can be started while directly reading electrode slope values specific to ion selective electrodes forming an ion selective electrode cartridge attached to a device.

BRIEF DESCRIPTION OF THE DRAWINGS

Fig. 1 is a diagram showing a schematic configuration example of an ion selective electrode cartridge.
Fig. 2 is a graph showing an example of electrode slope value measurement.
Fig. 3 is a graph for explaining a principle of electromotive force correction using a reference solution.
Fig. 4 is a diagram showing a vertical cross section of the ion selective electrode cartridge.
Fig. 5 is a diagram showing a horizontal cross section of the ion selective electrode cartridge.
Fig. 6 is a diagram showing examples of other shapes of a casing forming the ion selective electrode cartridge.
Fig. 7 is a chart showing composition examples of electrode films.
Fig. 8 is a diagram showing an example of use mode of the ion selective electrode cartridge.
Fig. 9 is a diagram for explaining an operation example of ion concentration measurement using the ion selective electrode cartridge.

MODES FOR CARRYING OUT THE INVENTION

(Ion Selective Electrode Cartridge)

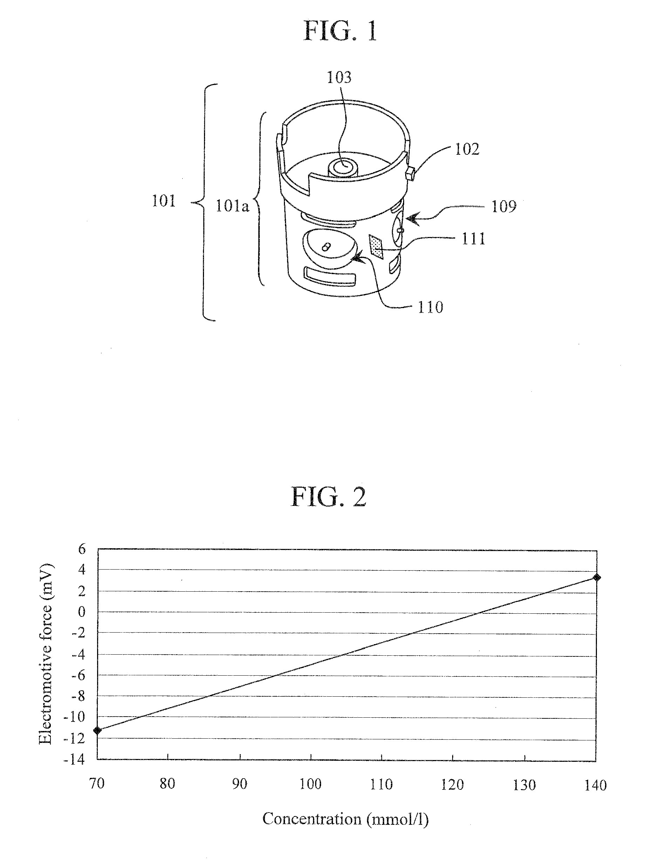

An ion selective cartridge of the present invention will be described in detail by using the drawings. Fig. 1 shows a configuration example of an ion selective electrode cartridge 101 to be used in an embodiment. A storage means 111 for storing electrode slope values Slope specific to ion selective electrodes 110 is attached to the ion selective cartridge 101 according to this embodiment. Fig. 1 shows an example in which the storage means 111 is attached to a casing 101a. Nevertheless, the storage means 111 can be attached to a portion other than the casing 101 a as will be described later.

When the electrode slope values Slope specific to the ion selective electrodes 110 are stored in the storage means 111 as described above, a device having the ion selective electrode cartridge 101 attached thereto can directly read the electrode slope values Slope required to analyze ion concentrations without executing a calibration and can start analyzing the ion concentrations in a short time. Note that the storage means 111 preferably stores as many electrode slope values Slope as the ion selective electrodes 110 provided to the ion selective electrode cartridge 101.

A medium capable of storing information such as a one-dimensional barcode, a two-dimensional barcode, and an IC tag, for example, is used as the storage means 111. On condition that the electrode slope values Slope are stable during a working life guaranteed for the ion selective electrode cartridge 101, information on the working life, for example, usable times or a usable time period can additionally be stored in the storage means. If the information on the working life is stored in the storage means, the working life of the ion selective electrode cartridge 101 can also automatically be managed in the device having the ion selective electrode cartridge 101 attached thereto.

As long as the storage means 111 can read the electrode slope values Slope and the like in this manner from the outside by using an optical method, an electromagnetic method, or the like, the storage means 111 does not necessarily have to be a rewritable medium. However, when a readable and writable storage medium such as the IC tag is used as the storage means, the total number of uses or the use start date and time for the ion concentration measurement can be managed as well as the ion selective electrode cartridge 101. For example, when multiple devices receive the ion selective electrode cartridge 101, for example, when the ion selective electrode cartridge 101 is handed over from a broken device to another device, the management of the working life of the ion selective electrode cartridge 101 can be continued automatically.

Each of the electrode slope values Slope stored in the storage means 111 is a slope representing a correspondence between an ion concentration and electrode output, that is, a slope of a relational expression (a log-linear equation) between the ion concentration and an electromotive force, and is obtained in advance by using the following method. Fig. 2 shows a measurement example of electrode slope values Slope of sodium ions ($Na^+$). The horizontal axis in Fig. 2 represents a concentration (ion concentration), the vertical axis represents an electromotive force, and the slope of the line represents an electrode slope value Slope. In order to determine the usability of each of the ion selective electrodes 110 to be used for ion concentration measurement, the following steps are performed before the ion selective electrode cartridge 101 is shipped as a product. Specifically, potential differences (electromotive forces) $E_H$ and $E_L$ generated between a reference electrode 109 and the ion selective electrode 110 are measured respectively for a high-concentration reference solution $C_H$ and a low-concentration reference solution $C_L$. Then, the electrode slope value Slope of the ion selective electrode to be used for particular ion concentration measurement is calculated based on the following formula.

$$\text{Slope} = (E_H - E_L)/\text{Log}(C_H/C_L) \qquad \dots \text{(Formula 2)}$$

Note that the formula above can be derived from the Nernst equation.

Generally, within a guaranteed working life, the electrode slope value Slope does not change or change is negligibly small, if any. However, the following mechanism is prepared for a case where higher-accuracy measurement is required.

For example, when a characteristic (for example, a percentage change) of how the electrode slope value Slope changes within the guaranteed working life is previously known, information for correcting the electrode slope value Slope in the working life and timing for the correction are additionally stored in the storage means. The percentage change of the electrode slope value Slope is stored as the characteristic of the change of the electrode slope value Slope in the storage means 111, and the electrode slope value Slope is corrected by using the percentage change every predetermined measurements. Thereby, the ion concentration measurement accuracy can be maintained high for a long time.

In addition, in order to ensure the ion concentration measurement accuracy, a consideration of a parameter other than the electrode slope value Slope is required. Specifically, an intercept variation in applying the electrode slope value Slope to a measured electromotive force is taken into consideration. The concentration of particular ions in a test solution (sample) is normally determined from the electrode slope value Slope and a difference between an electromotive force measured every measurement by use of the reference solution having a known concentration of the particular ions and an electromotive force obtained in measuring the sample. Also in the case of measuring the particular ion concentration by use of the ion selective electrode cartridge 101 of the present invention, a measurement error due to so-called an intercept variation due to occurrence of a drift of an electrode electromotive force can be eliminated by using: the electromotive force difference obtained by measuring the reference solution every measurement; and the electrode slope value Slope stored in the storage means 111. This embodiment provides a method for correcting an intercept variation of the ion selective electrode cartridge 101 by using a reference solution having a known concentration value of particular ions every measurement. The method is provided to eliminate the measurement error due to so-called an intercept variation due to occurrence of a drift of an electrode electromotive force. The particular ion concentration is calculated by using the electrode slope value from the electromotive force difference between the reference solution and the test solution (sample) after the intercept obtained by measuring the reference solution is corrected.

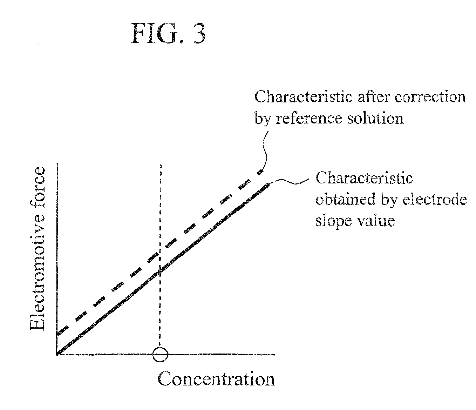

A principle of the correction using the reference solution is described by using Fig. 3. A circle shows the concentration of the reference solution in the graph. When an electromotive force corresponding to the known concentration is known as described above, it is possible to make clear a difference between the electromotive force in the test solution (sample) and the electromotive force existing in the particular ions having the concentration (shown by a dashed line in the graph). Note that the concentration of particular ions in the reference solution is desirably set at a median of a distribution range of the ion concentration of particular ions such as $Na^+$, $K^+$, or $Cl^-$, for example, in a serum sample. The median is used so as to minimize a measurement error even in a case of occurrence of such an unexpected event that the slope (a value of an electrode slope value Slope) of the electrode slope is changed within the working life.

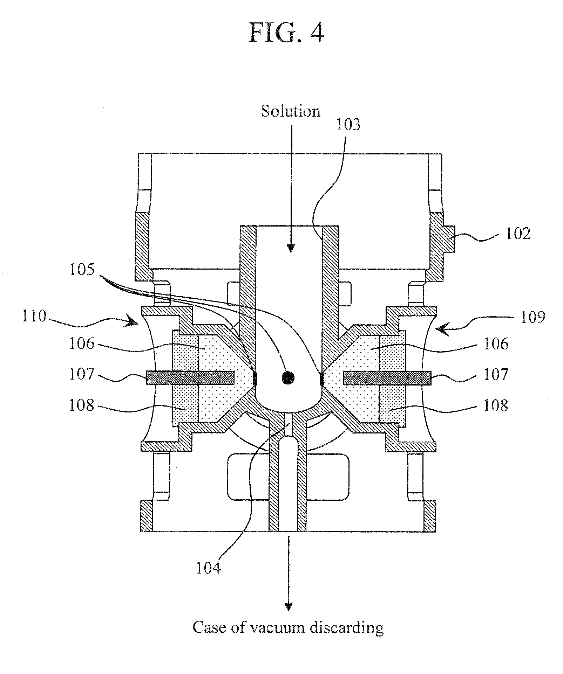

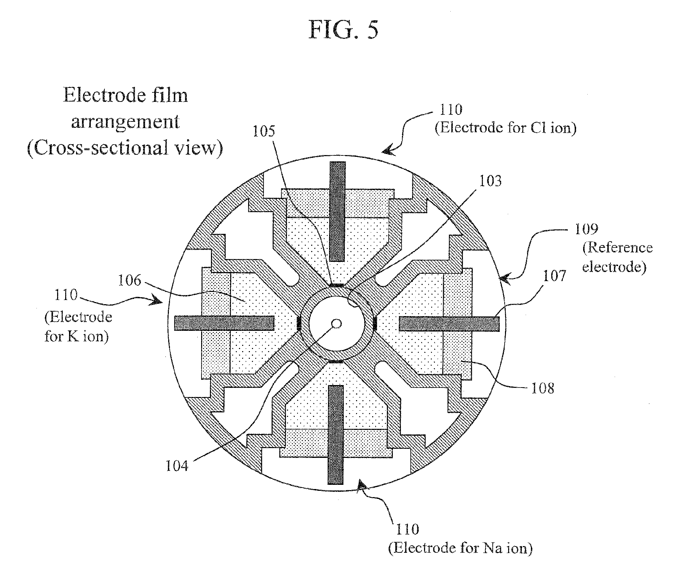

Subsequently, a description is given of a detailed structure of the ion selective electrode cartridge 101 used in the embodiment. Note that the ion selective electrode cartridge 101 employs a structure allowing the ion selective electrode cartridge 101 to be easily attached to and detached from a device used for analyzing the concentrations of particular species of ions dissolving in the test solution. Fig. 4 and Fig. 5 respectively show a vertical cross-sectional structure and a horizontal cross-sectional structure of the ion selective electrode cartridge 101 shown in Fig. 1.

In the cases of Fig. 1, Fig. 4, and Fig. 5, the ion selective electrode cartridge 101 includes a container 103 into which a test solution is infused, as well as a reference electrode 109 and three ion selective electrodes 110 which are arranged to surround the container 103. In the case of the cross-sectional structure shown in Fig. 5, the casing 101a of the ion selective electrode cartridge 101 has an almost cylindrical shape, and the container 103 having a test tube shape is formed to extend along the center axis of the casing 101a. In addition, the three ion selective electrodes 110 and the single reference electrode 109 are arranged along an outer circumference of the casing 101 a at 90 degrees intervals.

As described above, it is preferable that the container 103 into which the test solution is infused be arranged in the center of the casing 101a of the ion selective electrode cartridge and that the ion selective electrodes 110 and the reference electrode 109 be arranged at regular intervals on concentric circles around the center of the container 103. Note that what is required is to arrange at least one ion selective electrode 110 on the casing 101a of the ion selective electrode cartridge. Note that, from a viewpoint of simultaneous concentration measurements of multiple species of particular ions, it is preferable to provide two or more ion selective electrodes 110 and to arrange the reference electrode 109 and the ion selective electrodes 110 evenly spaced on the concentric circles around the center of the container 103. Incidentally, the reference electrode 109 and the ion selective electrodes 110 are preferably arranged on the same plane, but may be arranged at positions offset along the center axis of the casing 101 a.

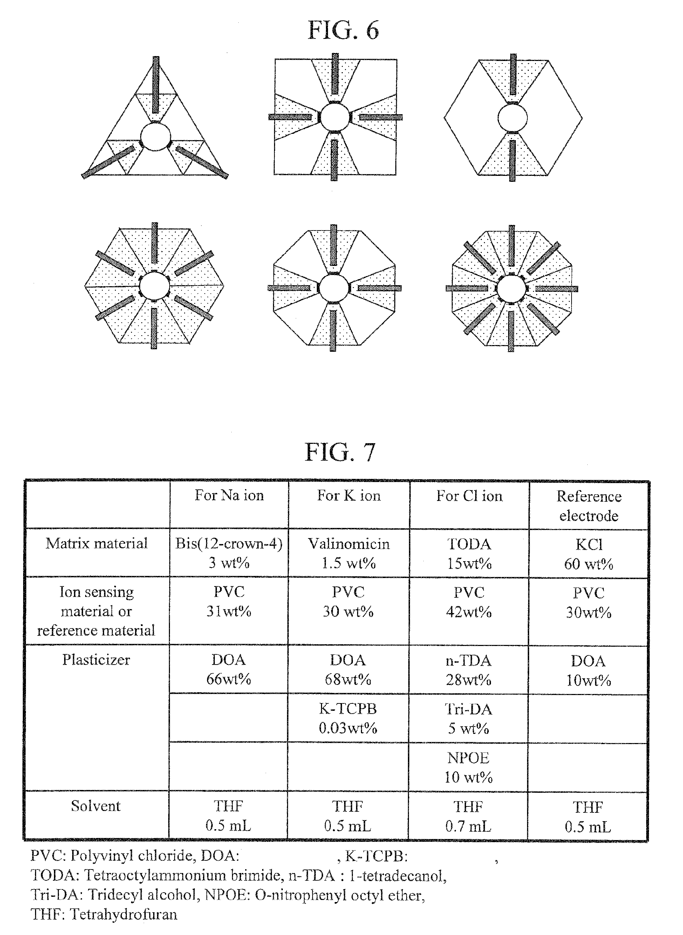

Fig. 1, Fig. 4, and Fig. 5 show the cylindrical casing 101a of the ion selective electrode cartridge, but the casing 101a may have a polygonal columnar shape such as a triangle columnar shape, a square columnar (rectangular parallel piped) shape, a hexagonal columnar shape, or a octagonal columnar shape, as shown in Fig. 6. Alternatively, the casing 101 a may have a card shape.

It is preferable that the container 103 into which the test solution is infused have a mortar-shaped bottom portion from a viewpoint of efficient cleaning. The inclination angle of the mortar shape is preferably 90 degrees to 135 degrees, more preferably is 95 degrees to 120 degrees, and even more preferably is 100 degrees to 110 degrees. In the embodiment the container 103 having a mortar-shaped bottom portion having an inclination angle of 105 degrees is used.

Moreover, the container 103 preferably includes a discharge hole 104 in the bottom portion thereof also from the efficient cleaning viewpoint. Further, the discharge hole 104 may also be configured to allow a vacuum system or the like for suction removal to be coupled to the container 103 so that the test solution or the reference solution can be discharged forcedly. In this case, an appropriate diameter of the discharge hole 104 can be set in consideration of the efficiency of the solution removal.

It is preferable that the ion selective cartridge 101 of the present invention further include a positioning mechanism 102 for the reference electrode 109.

The positional relationship between each ion selective electrode 110 and the reference electrode 109 is preferably set in advance. In the structure example in Fig. 5, the ion selective electrode 110 for sodium ions ($Na^+$), the ion selective electrode 110 for potassium ions ($K^+$), and the ion selective electrode 110 for chloride ions ($Cl^-$) are arranged in this order clockwise from the reference electrode 109 as a base point, for example.

Accurate ion concentration measurement requires identification of a position at which the reference electrode 109 is attached. Hence, this embodiment employs the positioning mechanism 102 so that attaching the reference electrode 109 arranged on the casing 101 a of the ion selective electrode cartridge can always be performed in only a particular positional relationship with the automatic ion concentration analyzer. Specifically, the positioning mechanism 102 having a protrusion shape for identifying the position of the reference electrode 109 is formed on the casing 101 a. In addition, a guide serving as a positioning mechanism paired with the positioning mechanism 102 is formed on an inner wall surface of an attaching portion of the automatic ion concentration analyzer so that the ion selective electrode cartridge 101 can be attached to the attaching portion only when the protruding positioning mechanism 102 formed on the ion selective electrode cartridge 101 is oriented in a particular direction.

Next, a description is given of electrode structures of the reference electrode 109 and the ion selective electrode 110. Small holes are formed in an inner surface of the container 103 every 90 degrees in a circumferential direction of the container 103. Each of the small holes, however, is closed by an electrode film 105 allowing only a particular ion to be measured to pass therethrough. Fig. 7 shows an example of a compound composition of each electrode film 105. Employing the electrode film 105 having the corresponding compound composition shown in Fig. 7 makes it possible to achieve a long life of the ion selective electrode cartridge 101. For example, the need for replacing the ion selective electrode cartridge 101 can be eliminated in 150 samples or more or for one month or longer. As the result of long-time stableness of the characteristic of the electrode film 105, the ion selective electrode cartridge 101 can be handled with the electrode slope value Slope considered to be constant during the use of the ion selective electrode cartridge 101. In an example, the necessity for a calibration of the electrode slope value Slope every measurement can be eliminated.

Further, spaces to be filled with an inner gel 106 outside the electrode films 105 are prepared in the casing 101a. A gel obtained by mixing an electrolyte solution (an aqueous solution) including a conductive material such as sodium chloride of 10 mmol/L, for example, and CMC (2 wt% of carboxymethylcellulose) together is used as the inner gel 106. Each of the spaces filled with the inner gel 106 is closed with a cap 108 having an internal electrode 107. Note that a silver wire of 1 mm in diameter is used for the internal electrode 107. Incidentally, an end portion of the internal electrode 107 is plated with a hydrochloric acid solution to form silver chloride AgCl. The electrode films 105, the inner gel 106, and the caps 108 each having the internal electrode 107 form the ion selective electrodes 110 and the reference electrode 109 which are described above.

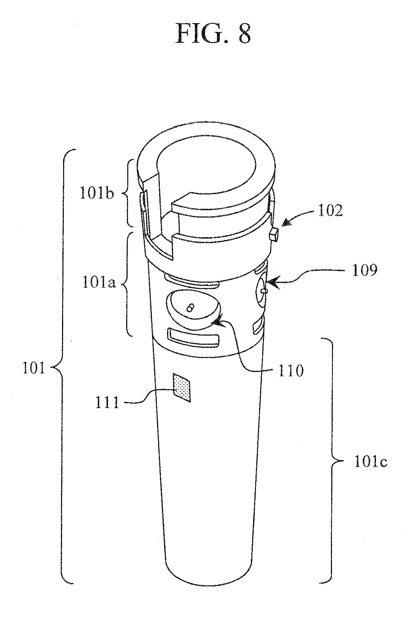

The ion selective electrode cartridge 101 of the present invention may further include a guide unit 101b or a waste solution tank 101c as shown in Fig. 8. The guide unit 101b is a member which serves as a guide when the ion selective electrode cartridge 101 is attached to the automatic ion concentration analyzer, and is exposed from a surface of the analyzer in the attached state to facilitate attaching and detaching. A cut-out is preferably provided in a circumference of the guide unit 101b as shown in Fig. 8 so as not to hinder movement of a probe for infusing the test solution and the reference solution into the container 103 (that is, in only one portion of a side surface over which the probe moves). The waste solution tank 101c is a container for collecting a waste solution which is attached on the lower surface side of the casing 101a. The aforementioned storage means 111 may be attached to the waste solution tank 101c as shown in Fig. 8. In consideration of environmental pollution, the reference solution is assumed to be main waste solution. A waste test solution is preferably collected in a reagent cartridge or the like and then treated as a biohazard. In this embodiment, all the waste reference solutions resulting within the guaranteed use times or use period are collected in the waste solution tank 101c. Alternatively, it is also possible to collect all the waste test solutions in the waste solution tank 101c and then to treat the waste solution tank 101c as a biohazard. In this case, what is required is to discard only the waste solution tank 101c, which has an effect that garbage amount is reduced in a test site. A structure can also be employed in which the waste solution tank 101c is connected with a waste solution tank receiving a waste solution flowing from a cleaning station of the automatic ion concentration analyzer.

(Method of Manufacturing Ion Selective Electrode Cartridge)

A method of manufacturing the ion selective electrode cartridge 101 of the present invention is not particularly limited, the ion selective electrode cartridge is manufactured as follows, for example.

Firstly, a casing 101a including a container 103 having two or more holes for electrode film formation and spaces to be filled with electrolyte solutions outside the holes for electrode film formation is prepared. The holes are provided in such a manner that at least one ion selective electrode 110 and the reference electrode 109 can be formed to surround the container 103 into which the test solution is infused. A material of the casing 101a is not particularly limited, but polyvinyl chloride, polypropylene, polystylene, polycarbonate, and the like are cited as the material from a viewpoint of easy treatment and handling. Preferably, the material is polyvinyl chloride. Next, electrode films 105 are formed on the holes for electrode film formation in the container 103 into which the test solution is infused. Each of the electrode films 105 is formed by casting a solution into the corresponding hole for electrode film formation, the solution being obtained by mixing a matrix material of a high polymer material such as polyvinyl chloride, either an ion sensing material or a reference material, and a plasticizer together in an appropriate solvent. Specifically, the solution obtained by mixing the matrix material, either the ion sensing material or the reference material, and the plasticizer together in the appropriate solvent is firstly cooled to -5 degrees C. Thereafter, the mixed solution is cast into the holes for electrode film formation without being kept at the temperature. Note that the electrode films are desirably formed at a temperature of 6 degrees C to 8 degrees C and at a humidity of 70% or lower in consideration of post-manufacturing stability of the films. The temperature and the humidity of the atmosphere are preferably maintained at the aforementioned ranges particularly until the cast solution is dried to form the films. In addition, the manufacturing is performed, while the temperature of the container 103 is maintained at 6 degrees C to 8 degrees C, and after it is checked that a difference between the outer air temperature and the temperature of the container 103 is within 1 degree C.

Further, a test can be performed after resistances of the electrode films are measured in manufacturing the films. For example, each space provided outside the corresponding hole for electrode film formation and the container 103 is filled with an electrolyte solution containing a conductive material such as sodium chloride of 10 mmol/L. At this time, the other holes are temporarily closed or filled with the same conductive material. Suppose a case where the corresponding electric resistance is measured through the conductive material. If each film is formed, a resistance value of 2 Megaohms or higher is shown in a case of sodium chloride of 17 mmol/L, for example. On the other hand, if the film is not formed (is broken), resistance of 500 Kiloohms or lower is shown. As described above, performing the tests of intermediate products enables reduction of a proportion defective. Next, in the intermediate products passing the test, the spaces provided outside the holes for electrode film formation are filled with an electrolyte solution containing the conductive material such as sodium chloride of 10 mmol/L. Note that the electrolyte solution is preferably in a gel state from a viewpoint of less likeliness of evaporation and excellent handling. Next, caps 108 each including an internal electrode 107 at the center thereof are prepared, the internal electrode 107 having an end formed of silver/silver chloride. Each cap 108 is fixed to close the corresponding space so that the internal electrode 107 can be soaked in the electrolyte solution, so that the electrolyte solution is confined in the space. At this time, the electrode is preferably fixed using thermo-compression bonding, ultrasonic compression bonding, an adhesive, or the like.

(Operation of Measuring Ion Concentrations)

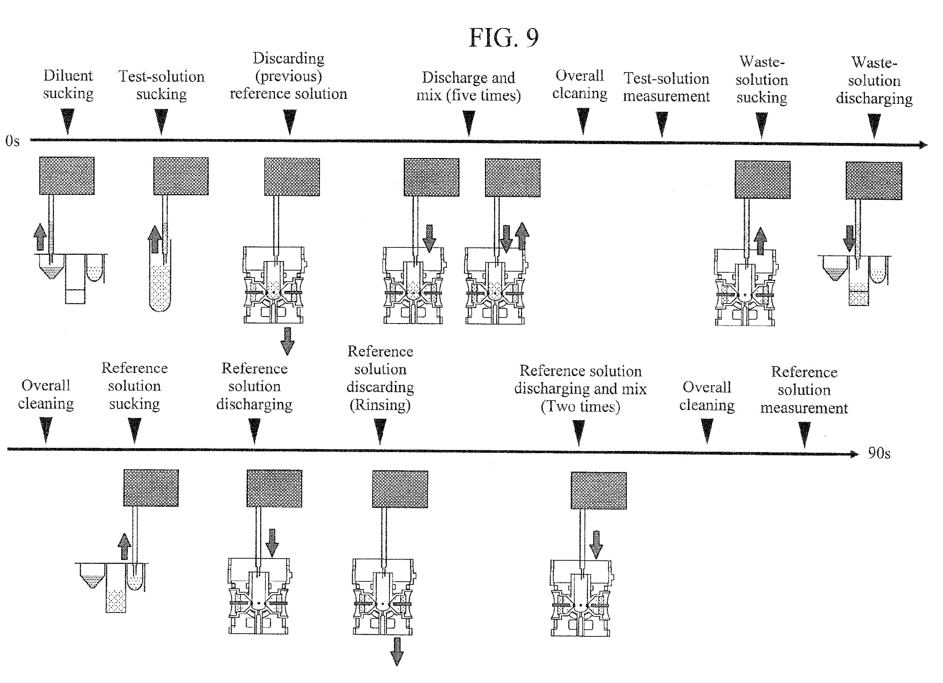

Next, an example of an operation of measuring ion concentrations using the ion selective electrode cartridge of the present invention will be described by using Fig. 9. Normally, the ion concentrations are herein measured automatically by an automatic ion concentration analyzer. Examples of the particular ions suitable for the measurement using the ion selective electrode cartridge of the present invention include sodium ions ($Na^+$), potassium ions ($K^+$), chloride ions ($Cl^-$), calcium ions ($Ca^{2+}$), magnesium ions ($Mg^{2+}$), bicarbonic acid ions ($HCO_3^-$), lithium ions ($Li^+$), zinc ions ($Zn^{2+}$), copper ions ($Cu^{2+}$), iron ions ($Fe^{2+}$), $Fe^{3+}$), and the like. Examples of the test solution include a solution derived from any of blood, urine, soil, and water, and the like.

The ion selective electrode cartridge 101 is attached to the automatic ion concentration analyzer at a predetermined position before the ion concentration measurement. Note that the ion selective electrode cartridge 101 is used for the ion concentration measurement without replacement work within usable times or a usable period as a working life. Further, as work before the start of the ion concentration measurement, containers into which a test solution, a diluent, and a reference solution are dispensed are set at predetermined positions of the automatic ion concentration analyzer.

After the end of the preparation work, a diluent sucking step is started. A probe is positioned in a container containing the dispensed diluent, and the diluent is sucked into the probe.

Subsequently, a test-solution sucking step is executed. The probe is positioned in a container containing the dispensed test solution, and the test solution is additionally sucked into the probe. It is preferable to suck air in advance before sucking the test solution. Sucking air in advance can lead to avoidance of a situation where liquid surfaces of the diluent and the test solution are in direct contact with each other.

Next, the process moves to a step of discarding a reference solution remaining in the ion selective electrode cartridge 101 from the previous measurement. In this step, a vacuum system or the like is activated, which causes a state where the air pressure is lower outside a bottom portion of the container 103 than in the inside thereof. This air pressure difference (so-called vacuum drawing) causes the reference solution remaining from the previous measurement in the container 103 to be discharged to the waste solution tank 101c through the discharge hole 104.

After the end of the reference-solution discarding step, the treatment process moves to a test-solution diluting step. At this time, the probe is positioned at a position at which the ion selective electrode cartridge 101 is attached. Subsequently, the probe is driven downward until a tip end thereof reaches the inside of the container 103 of the ion selective electrode cartridge. Thereafter, the test solution and the diluent are discharged from the probe into the container 103. At this time, the sucking and discharging a mixed solution (diluted test solution) are repeated certain times by using the probe to mix the test solution and the diluent together well in the container 103. Then, the tip end of the probe is drawn back from the mixed solution.

Next, a probe cleaning step is executed. The probe is moved up to a position of a cleaning station provided to the automatic ion concentration analyzer. In the cleaning step, both an outer wall surface of the probe and the inside thereof are cleaned with purified water. A waste solution in this step contains components of the test solution, but an amount of the test solution is extremely small as compared with the purified water. There is no concern about environmental pollution.

After the end of or in parallel with the cleaning step, measurement of concentrations of ions contained in the mixed solution is started. Note that the ion concentration measurement is preferably started at a predetermined time (for example, 30 seconds) after the end of an operation of stirring the mixed solution. This is because ion concentration measurement values are not stable immediately after the end of the stirring operation in some cases. Note that when multiple ion selective electrodes 110 are formed in the ion selective electrode cartridge 101, the ion concentration measurement is executed for each ion selective electrode 110.

For example, an electromotive force appearing between the internal electrode 107 of the reference electrode 109 and the internal electrode 107 of each ion selective electrode 110 for sodium ions (Na+), potassium ions (K+), or chloride ions (Cl⁻) is measured. When the multiple ion concentrations are measured as described above, the measurements may be performed in turn, but it is preferable that all the electromotive forces be simultaneously measured in consideration of a variation or the like of a measurement environment.

It is desirable that each measurement of the corresponding electromotive force be repeated multiple times and that an average value thereof be used as a measurement result. For example, six electromotive force measurements are executed for each ion species, and an average value of values not including the maximum value and the minimum value is used as a measurement result. The measurement result is held until a measurement result of the reference solution to be described later is obtained.

After the end of the test-solution measuring step, the process moves to a waste-solution sucking step. In this step, the probe is driven downward until the tip end thereof reaches the inside of the container 103 of the ion selective electrode cartridge. Then, all of the mixed solution (diluted test solution) in the container 103 is sucked into the probe.

When the sucking of the mixed solution (diluted test solution) is completed, the probe is drawn back, and then is driven to a solution discarding position. Thereafter, the mixed solution (diluted test solution) is discharged from the probe to the discarding tank to be discarded thereinto. Note that the test solution having the possibility of a biohazard is discarded into a sealed discarding tank (for example, a reagent cartridge).

After the end of the discarding of the mixed solution used for the measurement, the probe cleaning step is started. At this time, the probe is moved up to the position of the cleaning station provided to the automatic ion concentration analyzer. Also in the cleaning step, both the outer wall surface of the probe and the inside thereof are cleaned with purified water. A waste solution also contains components of the test solution, but an amount of the test solution is extremely small as compared with the purified water. There is no concern about environmental pollution.

Next, an ion-concentration measurement step using the reference solution (that is, an ion-concentration measurement-value calibration step) is started. At this time, the probe is positioned at the position at which the container containing the dispensed reference solution is attached, so that the reference solution is sucked into the probe.

Subsequently, the process moves to a first reference-solution discharging step. At this time, the probe is positioned at the position at which the ion selective electrode cartridge 101 is attached. Next, the probe is driven downward until the tip end thereof reaches the inside of the container 103 of the ion selective electrode cartridge 101. Thereafter, some of the reference solution is discharged from the probe into the container 103. The reference solution is used to rinse the container 103 contaminated with the test solution. When a predetermined amount of the reference solution is dispensed in the container 103, the vacuum system or the like is activated, which causes the state where the air pressure is lower outside the bottom portion of the container 103 than in the inside thereof. This air pressure difference (so-called vacuum drawing) causes the reference solution dispensed into the container 103 to be discharged to the waste solution tank 101c through the discharge hole 104. The waste reference solution also contains components of the test solution, but an amount of the test solution is extremely small. There is no concern about environmental pollution.

After the end of the discarding step (rising step), the reference solution left in the probe is discharged into the container 103. That is, a second reference-solution discharging step is executed. At this time, there is a slight temperature difference between the very small amount of reference solution left in the container 103 and the reference solution in the probe. Sucking and discharging the reference solution are repeated certain times by using the probe to eliminate the temperature difference.

Thereafter, the tip end of the probe is withdrawn upward from the container 103. Note that the ion concentration measurement of the reference solution is started at a predetermined time (for example, 30 seconds) after the end of an operation of stirring the reference solution. This is because ion concentration measurement values are not stable immediately after the end of the stirring operation in some cases.

The time period is utilized to execute a probe cleaning step. At this time, the probe is moved up to the position of the cleaning station. Also in the cleaning step, both the outer wall surface of the probe and the inside thereof are cleaned with purified water. After the completion of the cleaning, the probe is withdrawn to an initial position.

After the elapse of the predetermined time from the end of the reference solution stirring, the ion concentration measurement of the reference solution is started. When the multiple ion selective electrodes 110 are formed in the ion selective electrode cartridge 101, the ion concentration measurement is executed for each ion selective electrode 110. For example, an electromotive force appearing between the internal electrode 107 of the reference electrode 109 and the internal electrode 107 of each corresponding ion selective electrode 110 for sodium ions (Na+), potassium ions (K+), or chloride ions (Cl⁻) is preferably measured at the same time.

Each electromotive force measurement is executed under the same condition as that for the measurement of the test solution. Thus, it is desirable that each measurement of the corresponding electromotive force be repeated multiple times and that an average value thereof be used as a measurement result. For example, six electromotive force measurements are executed for each ion species, and an average value of values not including the maximum value and the minimum value is used as a measurement result.

The operation described above results in all the measurement values required to calculate the ion concentrations in the test solution. Subsequently, the automatic ion concentration analyzer calculates each concentration value of the particular ions in the test solution based on: the electromotive force measured for the particular ions in the test solution; the electromotive force measured for the particular ions in the reference solution; the electrode slope value Slope specific to the ion selective electrode 110 used for the measurement; and the ion concentration of the reference solution. Specifically, in order to correct an error due to so-called an intercept variation due to occurrence of a drift of the electrode electromotive force, the concentration value of the particular ions existing in the test solution is calculated from: the electromotive force measured for the particular ions in the reference solution; the electromotive force measured for the particular ions in the test solution; and the electrode Slope value held by the ion selective electrode 110 used for the measurement.

Thus, the operation of measuring the particular ions in the single test solution is completed. The same measurement operation is also executed for a different test solution, as necessary.

(Conclusion)

As described above, the storage means 111 is arranged on the ion selective electrode cartridge 101 to store the electrode slope values Slope specific to the respective ion selective electrodes 110, which thereby can eliminate the need for measuring electrode slope values Slope before the start of ion concentration measurement. Accordingly, a time required to measure ion concentrations of particular ions in a single test solution can be made shorter than that in a conventional technique. In addition, since the need for preparing a calibration solution dedicated for a calibration on the device side is eliminated, the device can be made smaller and maintenance costs can be reduced.

Further, when a percentage change of an electrode slope value Slope during a working life is stored in the storage means 111, the electrode slope value Slope can be changed in accordance with change of the electrode slope value Slope, if any, during the working life. Thus, deterioration of ion concentration measurement accuracy can be avoided.

Besides, when a readable and writable recording medium is used as the storage means 111, the total number of uses or the use start date and time of the ion selective electrode cartridge 101 for the particular ion concentration measurement can be updated for every use. When the readable and writable storage means 111 is provided to the ion selective electrode cartridge 101, management of the working life can be continued even in a case of using the single ion selective electrode cartridge 101 for multiple devices. For example, even if the ion selective electrode cartridge 101 needs to be attached to another device due to maintenance or a failure of the current device, high measurement result reliability can be achieved. In addition, the ion selective electrode cartridge 101 is not discarded before the end of the life.

Further, as described above, when the particular ion concentrations are measured by using the ion selective electrode cartridge 101 1 of the present invention, an intercept held by the electrode and stored in the storage means 111 is corrected by using the electromotive force measured by using the reference solution every measurement. Thereby, a measurement error due to the intercept variation can be eliminated. Still further, the concentration of the particular ions in the reference solution used for correcting an intercept of each electrode is desirably set at a median of a distribution range of the ion concentration of particular ions such as $Na^+$, $K^+$, or $Cl^-$, for example, in a case where the test solution is a serum sample. The median is used so as to minimize a measurement error even in a case of occurrence of such an unexpected event that the slope (a value of an electrode slope value Slope) is changed within the working life.

(Other Embodiment)

Hereinbelow, a description is given of a modification of the embodiment described above.

(Other Composition Example of Electrode Film)

In the aforementioned description, the case where the electrode films are formed in the compositions shown in Fig. 7 has been described. Meanwhile, an electrode film in a composition shown below may be used for the electrode film for the chloride ions, instead of the composition shown in Fig. 7. In other words, an electrode film 105 formed in the following manner may be used for the chloride ions. Specifically, weighing and addition are performed in percentages that polyvinyl chloride (PVC) as a chloride sensing material is 19% by weight, 1-tetradecanol (n-TDA) as a first plasticizer is 24% by weight, o-nitrophenyl octyl ether (o-NPOE) as a second plasticizer is 10% by weight, tridecyl alcohol (nTriDA) as a third plasticizer is 5% by weight, and a high polymar material (TODA) as a matrix material is 42% by weight, and then tetrahydrofuran is added to the solution for dispersion, so that the electrode film 105 is formed.

The following shows a specific example of measurement results of measurement performed using a control serum (Seronorm (registered trademark) Human produced by SERO AS and imported by SEKISUI MEDICAL Co., Ltd.) by using an ion selective electrode cartridge manufactured while the new composition is applied to an electrode film for the chloride ions. Note that, the ion selective electrode cartridge includes three electrodes formed therein, the electrodes including a Na electrode and a K electrode in addition to the Cl electrode. In addition, concentrations as the measurement results are obtained through the aforementioned real-time calculations of the electrode slope values Slope.

Table 1 shows relationships between the measurement results measured by an automatic analyzer and electrode slope values Slope. Note that a reference solution in Table 1 corresponds to the high-concentration reference solution CH, and a 2/3 reference solution corresponds to the low-concentration reference solution CL.

[Table 1]

|  | Na | K | Cl |
|---|---|---|---|
| Potential at specimen (mV) | 35.981 | 61.037 | 58.450 |
| Potential in reference solution (mV) | 34.474 | 67.050 | 63.623 |
| Potential in 2/3 reference solution (mV) | 24.842 | 56.451 | 72.954 |
| Electrode slope value calculated during measurement (actual slope value) | 55 | 55 | -52 |
| Initial slope value | 56 | 57 | -50 |
| Slope value criteria | 40 to 70 | 40 to 70 | -40 to -70 |
| Concentration (mmol/L) (case of calculation using initial value as slope value) | 149.0 | 3.92 | 125.7 |
| Concentration (mmol/L) (case of calculation using actual slope value) | 149.2 | 3.89 | 124.7 |
| Measurement value for reference (mmol/L) | 147±4 | 3.7±0.2 | 121±4 |

EXPLANATION OF THE REFERENCE NUMERALS

101 ... ion selective electrode cartridge, 101a ... casing, 101b ... guide unit, 101c ... waste solution tank , 102 ... positioning mechanism , 103 ... container, 104 ... discharge hole, 105 ... electrode film, 106 ... inner gel, 107 ... internal electrode, 108 ... cap, 109 ... reference electrode, 110 ... ion selective electrode, 111 ... storage means

**Claims**

1. An ion selective electrode cartridge equipped with an ion selective electrode for measuring a concentration of particular ions in a test solution, the ion selective electrode cartridge comprising:

   a storage means for storing an electrode slope value specific to the ion selective electrode.

2. The ion selective electrode cartridge according to claim 1, wherein the storage means includes one or more storage means selected from a one-dimensional barcode, a two-dimensional barcode, and an IC tag.

3. The ion selective electrode cartridge according to any one of claims 1 and 2, wherein
   the storage means comprises a readable and writable storage medium, and
   the total number of uses of the ion selective electrode cartridge is recorded at every measurement of the concentration of the particular ions.

4. The ion selective electrode cartridge according to any one of claims 1 to 3, wherein the electrode slope value is calculated from the following expression:

$$(E_H-E_L)/Log(C_H/C_L),$$

   (where $E_H$ represents an electromotive force in measuring a high-concentration reference solution, $E_L$ represents an electromotive force in measuring a low-concentration reference solution, $C_H$ represents a particular ion concentration in the high-concentration reference solution, and $C_L$ represents a particular ion concentration in the low-concentration reference solution).

5. The ion selective electrode cartridge according to any one of claims 1 to 4, wherein
   the storage means stores a percentage change of the electrode slope value, and the percentage change is used for correcting the electrode slope value every predetermined number of measurements.

6. The ion selective electrode cartridge according to any one of claims 1 to 5, comprising:

a container into which the test solution is infused;
a reference electrode; and
one or more of the ion selective electrodes which each form an electrical path with the reference electrode when the test solution is infused, and wherein
the ion selective electrode and the reference electrode are arranged to surround the container.

7. The ion selective electrode cartridge according to any one of claims 1 to 6, comprising a positioning mechanism configured to define a positional relationship between the electrodes.

8. The ion selective electrode cartridge according to any one of claims 6 and 7, wherein
the container is arranged in the center of a casing, and
the ion selective electrode and the reference electrode are arranged at regular intervals on concentric circles around the center of the container.

9. The ion selective electrode cartridge according to claim 8, comprising two or more of the ion selective electrodes, and wherein
the reference electrode and the ion selective electrodes are arranged evenly spaced on concentric circles around the center of the container.

10. The ion selective electrode cartridge according to any one of claims 8 and 9, wherein the casing has a cylindrical shape or a polygonal columnar shape.

11. The ion selective electrode cartridge according to any one of claims 6 to 9, comprising a discharge hole for a reference solution in a bottom portion of the container.

12. The ion selective electrode cartridge according to any one of claims 1 to 11, wherein the particular ions include one or more species of ions selected from the group of sodium ions, potassium ions, chloride ions, calcium ions, magnesium ions, bicarbonate ions, lithium ions, zinc ions, copper ions, and iron ions.

13. The ion selective electrode cartridge according to any one of claims 1 to 12, wherein the test solution is a solution derived from any of blood, urine, soil and water.

14. A method for manufacturing the ion selective electrode cartridge according to any one of claims 1 to 12, the method comprising:

forming at least one electrode film corresponding to the ion selective electrode over an electrode film formation hole of the ion selective electrode cartridge, and wherein
the forming includes:

cooling a mixed solution containing a composition material for the electrode film to a predetermined temperature at or below freezing point;
casting the mixed solution into the electrode film formation hole; and forming the electrode film by drying the mixed solution after the casting in an atmosphere maintained at a temperature of 6 degrees C to 8 degrees C and at a humidity of 70% or lower.

# FIG. 1

# FIG. 2

# FIG. 3

Characteristic after correction
by reference solution

Characteristic
obtained by electrode
slope value

Electromotive force

Concentration

# FIG. 4

# FIG. 5

Electrode film
arrangement
(Cross-sectional view)

105

110
(Electrode for Cl ion)

103

109
(Reference
electrode)

106

107

110
(Electrode
for K ion)

108

104

110
(Electrode for Na ion)

## FIG. 6

## FIG. 7

| | For Na ion | For K ion | For Cl ion | Reference electrode |
|---|---|---|---|---|
| Matrix material | Bis(12-crown-4) 3 wt% | Valinomicin 1.5 wt% | TODA 15wt% | KCl 60 wt% |
| Ion sensing material or reference material | PVC 31wt% | PVC 30 wt% | PVC 42wt% | PVC 30wt% |
| Plasticizer | DOA 66wt% | DOA 68wt% | n-TDA 28wt% | DOA 10wt% |
| | | K-TCPB 0.03wt% | Tri-DA 5 wt% | |
| | | | NPOE 10 wt% | |
| Solvent | THF 0.5 mL | THF 0.5 mL | THF 0.7 mL | THF 0.5 mL |

PVC: Polyvinyl chloride, DOA:                , K-TCPB:                ,
TODA: Tetraoctylammonium brimide, n-TDA : 1-tetradecanol,
Tri-DA: Tridecyl alcohol, NPOE: O-nitrophenyl octyl ether,
THF: Tetrahydrofuran

# FIG. 8

# FIG. 9

Diluent sucking

Test-solution sucking

Discarding (previous) reference solution

Discharge and mix (five times)

Overall cleaning

Test-solution measurement

Waste-solution sucking

Waste-solution discharging

0s

Overall cleaning

Reference solution sucking

Reference solution discharging

Reference solution discharging (Rinsing)

Reference solution discharging and mix (Two times)

Overall cleaning

Reference solution measurement

90s

EP 2 479 561 A1

## INTERNATIONAL SEARCH REPORT

| International application No. |
|---|
| PCT/JP2010/066199 |

**A. CLASSIFICATION OF SUBJECT MATTER**
*G01N27/26*(2006.01)i, *G01N27/416*(2006.01)i

According to International Patent Classification (IPC) or to both national classification and IPC

**B. FIELDS SEARCHED**

Minimum documentation searched (classification system followed by classification symbols)
G01N27/26, G01N27/416

Documentation searched other than minimum documentation to the extent that such documents are included in the fields searched
Jitsuyo Shinan Koho        1922–1996    Jitsuyo Shinan Toroku Koho    1996–2010
Kokai Jitsuyo Shinan Koho  1971–2010    Toroku Jitsuyo Shinan Koho    1994–2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2005-345464 A  (Matsushita Electric Industrial Co., Ltd.), 15 December 2005 (15.12.2005), paragraphs [0020] to [0024], [0031], [0038] to [0040], [0071] & US 2008/0105566 A1     & EP 1739407 A1 | 1-5,12-14<br>6-11 |
| A | JP 2-159548 A  (Toshiba Corp.), 19 June 1990 (19.06.1990), entire text; all drawings (Family: none) | 1-14 |
| A | JP 2004-251799 A  (Toshiba Corp.), 09 September 2004 (09.09.2004), entire text; all drawings (Family: none) | 1-14 |

| ☒ | Further documents are listed in the continuation of Box C. | | ☐ | See patent family annex. |
|---|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 October, 2010 (25.10.10) | 09 November, 2010 (09.11.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2010/066199 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2001-264283 A   (Hitachi, Ltd.),<br>26 September 2001 (26.09.2001),<br>entire text; all drawings<br>(Family: none) | 1-14 |
| A | JP 2008-51620 A   (Toshiba Corp.),<br>06 March 2008 (06.03.2008),<br>entire text; all drawings<br>(Family: none) | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI2159548 B
- JP 2004251799 A
- JP 2001264283 A
- JP 2008051620 A